(19) Europäisches Patentamt
European Patent Office
Office européen des brevets

(11) Veröffentlichungsnummer: **0 303 031 B1**

# (12) EUROPÄISCHE PATENTSCHRIFT

(45) Veröffentlichungstag der Patentschrift: **18.12.91**

(51) Int. Cl.$^5$: **C08L 77/00**, C08K 7/14, C08K 3/02

(21) Anmeldenummer: **88110059.8**

(22) Anmeldetag: **24.06.88**

Die Akte enthält technische Angaben, die nach dem Eingang der Anmeldung eingereicht wurden und die nicht in dieser Patentschrift enthalten sind.

## (54) Flammgeschützte thermoplastische Formmassen auf der Basis von verstärkten Polyamiden.

(30) Priorität: **04.07.87 DE 3722156**

(43) Veröffentlichungstag der Anmeldung:
**15.02.89 Patentblatt 89/07**

(45) Bekanntmachung des Hinweises auf die Patenterteilung:
**18.12.91 Patentblatt 91/51**

(84) Benannte Vertragsstaaten:
**BE DE FR GB NL**

(56) Entgegenhaltungen:
**EP-A- 0 019 768**
**EP-A- 0 255 901**
**DE-A- 2 435 266**
**DE-A- 2 703 416**
**EP-A- 0 195 301**
**DE-A- 1 931 387**
**DE-A- 2 454 770**
**DE-A- 2 827 760**

(73) Patentinhaber: **BASF Aktiengesellschaft**
**Carl-Bosch-Strasse 38**
**W-6700 Ludwigshafen(DE)**

(72) Erfinder: **Plachetta, Christoph, Dr.**
**Albert-Einstein-Allee 12**
**W-6703 Limburgerhof(DE)**
Erfinder: **Weiss, Hans-Peter, Dr.**
**Pfalzring 75**
**W-6704 Mutterstadt(DE)**
Erfinder: **Koch, Eckhard Michael, Dr.**
**Merowingerstrasse 8**
**W-6701 Fussgoenheim(DE)**
Erfinder: **Gutsche, Herbert**
**Koenigsbergerstrasse 4**
**W-6711 Beindersheim(DE)**

EP 0 303 031 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft flammgeschützte thermoplastische Formmassen, enthaltend als wesentliche Komponenten,

A) 5-92 Gew.-% eines Polyamids

B) 5-60 Gew.-% eines verstärkenden Füllstoffs sowie, als Flammschutzmittelkombination,

C) 2-15 Gew.-% roten Phosphor und

D) 1-30 Gew.-% eines Olefinpolymerisats, aufgebaut aus

$d_1$) 55-79,5 Gew.-% mindestens eines $\alpha$-Olefins mit 2-8 C-Atomen

$d_2$) 20-40 Gew.-% eines primären oder sekundären $C_1$-$C_{12}$-Alkylesters der Acrylsäure oder Methacrylsäure oder Mischungen derartiger Ester,

$d_3$) 0,5-20 Gew.-% eines säurefunktionellen und/oder eines latent säurefunktionellen Monomeren einer ethylenisch ungesättigten Mono- oder Dicarbonsäure

$d_4$) 0-20 Gew.-% eines Epoxygruppen enthaltenden Monomeren,

mit der Maßgabe, daß die Komponente D kein Olefinhomopolymerisat ist, die Formmassen kein Titandioxid enthalten und Massen aus

A) 48,1 Gew.-% Polyhexamethylenadipinamid,

B) 35,0 Gew.-% Glasfasern,

C) 6,0 Gew.-% rotem Phosphor,

D) 10,0 Gew.-% eines Ethylen/n-Butylacrylat/Maleinsäureanhydrid-Terpolymeren (Gew.-Verhältnis 66 : 33 : 1) und 0,9 Gew.-% Cadmiumoxid

ausgeschlossen sind.

Darüber hinaus betrifft die Erfindung die Verwendung derartiger Formmassen zur Herstellung von Fasern, Folien und Formkörpern und aus den erfindungsgemäßen Formmassen als wesentlichen Komponenten erhältliche Formkörper.

Aus der DE-OS 19 31 387 sind glasfaserverstärkte Polyamidformmassen bekannt, die roten Phosphor als Flammschutzmittel enthalten. Zwar bestehen diese Massen den Brandtest nach ASTM 635-63, nicht jedoch in allen Fällen den strengeren Test nach UL 94 (Underwriters Laboratories), so daß die Flammfestigkeit für manche Zwecke nicht ausreicht.

Aus der EP-A 19768 sind flammgeschützte Polyamid-Formmassen bekannt, die faserförmige Füllstoffe und eine Mischung aus rotem Phosphor und Melamincyanurat als Flammschutzmittel enthalten. Das Melamincyanurat ist eine wesentliche Komponente zur Erzielung einer ausreichenden Flammfestigkeit; den Vergleichsbeispielen ist zu entnehmen, daß roter Phosphor allein nicht zum gewünschten Ergebnis führt.

In der DE 24 35 266 werden kautschukmodifizierte, verstärkte Polyamidformmassen beschrieben, die als Flammschutzmittel roten Phosphor enthalten können. Bei den zur Modifizierung verwendeten Pfropfkautschuken handelt es sich um Kautschuke auf Acrylatbasis. Um eine ausreichende Schlagzähigkeit zu erzielen, muß so viel Kautschuk eingesetzt werden, daß die anderen wünschenswerten Eigenschaften, insbesondere der Elastizitätsmodul, der verstärkten Massen in unerwünscht starkem Ausmaß verschlechtert werden. In der DE-OS 24 54 770 werden Polyamidformassen beschrieben, die 0,5-35 Gewichtsteile eines Pfropfpolymerisats aus $\alpha$-Olefin-Vinylester-Copolymerisaten oder $\alpha$-Olefin-Acrylester-Polymerisaten, auf welche 0,5-10 Gewichtsteile ungesättigte Carbonsäuren oder deren funktionelle Derivate aufgepfropft wurden, enthalten. Roter Phosphor ist als Beispiel für ein mögliches Flammschutzmitel unter anderem gennant, doch finden sich keinerlei Hinweise darauf, daß geringe Mengen an Pfropfpolymerisaten in Verbindung mit rotem Phosphor die Flammbeständigkeit verbessern könnten.

Dasselbe gilt für verstärkte Polyamidformmassen und mit (Meth)acrylsäure modifizierte Ethylen-Propylenpfropfkautschuke, welche gegebenenfalls mit rotem Phosphor flammfest ausgerüstet sein können. Derartige Massen sind aus der DE-A-27 03 416 bekannt.

Der vorliegenden Erfindung lag daher die Aufgabe zugrunde, mit rotem Phosphor flammfest ausgerüstete verstärkte Polyamid-Formmassen zur Verfügung zu stellen, die neben einer verbesserten Flammbeständigkeit auch insgesamt verbesserte mechanische Eigenschaften aufweisen. Darüber hinaus war auch die Stabilität des eingesetzten Phosphors in ausreichendem Maße zu gewährleisten.

Diese Aufgabe wird erfindungsgemäß durch die eingangs definierten thermoplastischen Formmassen gemäß Anspruch 1 gelöst.

Bevorzugte Massen dieser Art sind den Unteransprüchen zu entnehmen.

Die als Komponente A) in den Massen enthaltenen Polyamide sind an sich bekannt und umfassen die halbkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210

beschrieben.

Die Polyamide können z.B. durch Kondensation äquimolarer Mengen einer gesättigten oder einer aromatischen Dicarbonsäure mit 4 bis 12 Kohlenstoffatomen, mit einem Diamin, welches 4 bis 14 Kohlenstoffatome aufweist, hergestellt werden, oder durch Kondensation von $\omega$-Aminocarbonsäuren oder Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und ein Polyamid aus Di(p-aminocyclohexyl)-methan- und Dodecandisäure. Es ist auch möglich, gemäß der Erfindung Polyamide zu verwenden, die durch Copolykondensation von zwei oder mehr der obengenannten Polymeren oder ihrer Komponenten hergestellt worden sind, z.B. ein Copolymeres aus Caprolactam, Terephthalsäure und Hexamethylendiamin Vorzugsweise sind die Polyamide linear und haben Schmelzpunkte von mehr als 200 °C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1 %igen Lösung in 96 %iger Schwefelsäure bei 23 °C, was einem Molekulargewicht (Gewichtsmittelwert) von etwa 15 000 bis etwa 45 000 entspricht. Polyamide mit einer relativen Viskosität von 2,5 bis 4.0, insbesondere 2,6 bis 3,5 werden bevorzugt verwendet.

Verfahren zur Herstellung solcher Polyamide sind an sich bekannt und in der Literatur beschrieben.

Der Anteil der Polyamide A) an den erfindungsgemäßen Formassen beträgt 5 bis 92, vorzugsweise 35 bis 85 und insbesondere 45 bis 75 Gew.-%.

Als verstärkende Füllstoffe B) sind prinzipiell alle Füllstoffe geeignet, die eine Verbesserung der mechanischen Eigenschaften der Formmassen mit sich bringen. Bevorzugt werden faserförmige Füllstoffe, wie Glasfasern, Kohlenstoff-Fasern oder auch faserförmige Silikate, wie Wollastonit. Auch Glaskugeln können vorteilhaft eingesetzt werden.

Bei der Verwendung von Glasfasern können diese zur besseren Verträglichkeit mit dem Polyamid mit einer Schlichte und einem Haftvermittler ausgerüstet sein. Im allgemeinen haben die Glasfasern einen Durchmesser im Bereich von 6 bis 20 $\mu$m. Die Einarbeitung in die Formmassen kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Der Anteil der verstärkenden Füllstoffe B) an den erfindungsgemäßen Formmassen beträgt 5 bis 60, vorzugsweise 10 bis 55 und insbesondere 15 bis 50 Gew.%, bezogen auf das Gesamtgewicht der Formmassen.

Der als Bestandteil der Flammschutzmittelkombination C) eingesetzte rote Phosphor kann direkt, wie er kommerziell erhältlich ist, eingesetzt werden. Es sind jedoch auch Produkte im Handel, in denen der rote Phosphor oberflächlich mit niedermolekularen flüssigen Substanzen wie Siliconöl, Paraffinöl oder Estern der Phthalsäure oder Adipinsäure oder Polymeren oder Oligomeren beschichtet ist. Außerdem sind Konzentrate von rotem Phosphor, z.B. in einem Polyamid, als Flammschutzmittel geeignet.

Die mittlere Teilchengröße ($d_{50}$) der in den Formmassen verteilten Phosphorpartikel liegt bevorzugt im Bereich von 0,0001 bis 0,5, insbesondere von 0,001 bis 0,2 mm.

Als weiteren Bestandteil der Flammschutzmittelkombination enthalten die erfindungsgemäßen Formmassen 1-30, vorzugsweise 2-25 und insbesondere 5-20 Gew.-% eines Olefinpolymerisats. Dieses ist aufgebaut aus:

$d_1$) 55-79,5 Gew.-% mindestens eines $\alpha$-Olefins mit 2-8 C-Atomen

$d_2$) 20-40 Gew.-% eines primären oder sekundären $C_1$-$C_{12}$-Alkylesters der Acrylsäure oder Methacrylsäure oder Mischungen derartiger Ester,

$d_3$) 0,5-20 Gew.-% eines säurefunktionellen oder latent säurefunktionellen Monomeren einer ethylenisch ungesättigten Mono- oder Dicarbonsäure und

$d_4$) 0-20 Gew.-% eines Epoxygruppen enthaltenden Monomeren,

mit der Maßgabe, daß die Komponente D kein Olefinhomopolymerisat ist.

Dabei ist zu beachten, daß es sich bei der Komponente D nicht um Olefinhomopolymerisate, z.B. Polyethylen, handelt, da mit derartigen Produkten die vorteilhaften Wirkungen nicht in gleichem Maße erzielt werden.

Im folgenden werden einige bevorzugte Arten solcher Olefinpolymerisate vorgestellt.

Bevorzugte Olefinpolymerisate sind Copolymere von $\alpha$-Olefinen mit 2-8 C-Atomen, insbesondere des Ethylens mit $C_1$-$C_{18}$-Alkylestern der Acrylsäure und/oder Methacrylsäure.

Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n- und i-Butyl-, 2-Ethylhexyl-, Octyl- und Decylacrylate bzw. die entsprechenden Ester der Methacrylsäure. Von diesen werden N-Butylacrylat und 2-Ethylhexlacrylat besonders bevorzugt.

Anstelle der Ester $d_2$) oder zusätzlich zu diesen können in den Olefinpolymerisaten auch säurefunktionelle und/oder latent säurefunktionelle Monomere ethylenisch ungesättigter Mono- oder Dicarbonsäuren ($d_3$) oder Epoxygruppen aufweisende Monomere ($d_4$) enthalten sein.

Als Beispiele für Monomere $d_3$) seien hier nur Acrylsäure, Methacrylsäure, tertiäre Alkylester dieser Säuren, insbesondere tert.-Butylacrylat und Dicarbonsäuren wie z.B. Maleinsäure und Fumarsäure bzw. Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere die bereits erwähnten tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV um Monomerengemisch in die Olefinpolymerisate eingebaut.

$$R_1C(COOR_2)=C(COOR_3)R_4 \qquad (I)$$

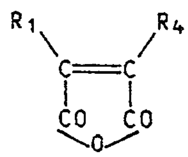

(II)

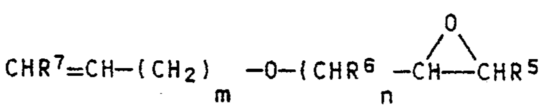

(III)

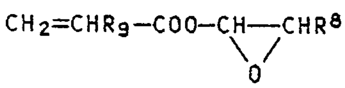

(IV)

wobei $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt sind $R^1$ - $R^7$ Wasserstoff, und m hat den Wert 0 oder 1 und n ist 1. Die entsprechenden Verbindungen sind Maleinsäure, Fumarsäure, Maleinsäureanhydrid, ($d_3$) bzw. Alkylglycidylether oder Vinylglycidylether ($d_4$).

Bevorzugte Verbindungen der Formeln I, II, III und IV sind Maleinsäure und Maleinsäureanhydrid als Komponente $d_3$) und Epoxygruppen-enthaltende Ester der Acrylsäure und/oder Methacrylsäure, wobei Glycidylacrylat und Glycidylmethacrylat (als Komponente $d_4$) besonders bevorzugt werden.

Als besonders vorteilhaft für einige Anwendüngen haben sich Olefinpolymerisate aus 55 bis 79,5 Gew.-% Ethylen, 20 bis 40 Gew.-% der Komponente $d_2$), 0,5 bis 20 Gew.-% der Komponente $d_3$) und 0 bis 20 Gew.-% der Komponente $d_4$) herausgestellt.

Bei der Verwendung solcher Olefinpolymerisate beträgt deren Anteil bevorzugt 1 bis 10, insbesondere 2 bis 9 und ganz besonders 3 bis 8 Gew.-% bezogen auf das Gesamtgewicht der Komponenten A) bis D).

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190° C und 2, 16 kg Belastung).

Es versteht sich, daß auch Mischungen der vorstehend aufgeführten Olefinpolymerisate eingesetzt werden können.

Neben den wesentlichen Komponenten A) bis D) können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A) bis D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente (außer Titandioxid), nicht verstärkende Füllstoffe und Weichmacher.

Oxidationsverzögerer und Wärmestablisatoren, die den thermoplastischen Massen gemäß der Erfindung zugesetzt werden können, sind z.B Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder lodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearingsäurealkylester und -amide sowie Ester des Pentaerythrits mit langkettigen Fettsäuren.

Unter den Zusatszstoffen sind auch Stabilisatoren, die die Zersetzung des roten Phosphors in Gegenwart von Feuchtigkeit und Luftsauerstoff verhindern. Als Beispiel hierfür seien Zinkoxid und Cadmiumoxid genannt.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 220 bis 300 °C.

Die erfindungsgemäßen Formmassen zeichnen sich durch ihre guten mechanischen Eigenschaften, insbesondere einen hohen Elastizitätsmodul bei hervorragender Flammbeständigkeit aus. Darüber hinaus ist auch die Bildung von löslichem Phosphor beim Lagern über längere Zeiträume gering.

Infolge dieses Eigenschafsspektrums eignen sich die erfindungsgemäßen Formmassen besonders zur Herstellung von Fasern, Folien und Formkörpern.

## Beispiele

Zur Herstellung von erfindungsgemäßen Formmassen wurden folgende Komponenten eingesetzt:

Komponente A

Polyhexamethylenadipinsäureamid mit einer $\eta_{rel}$ von 2,6, gemessen in 1 -%iger Lösung in 96 Gew.-% $H_2SO_4$ bei 25 °C (Ultramid® A3 der BASF AG)

Komponente B

Glasfasern

Komponente C

roter Phosphor

Komponente D

Olefinpolymerisat aus
59,8 Gew.-% Ethylen
35,0 Gew.-% n-Butylacrylat
4,5 Gew.-% Acrylsäure
0,7 Gew.-% Maleinsäureanhydrid
hergestellt durch Copolymerisation der Monomeren bei erhöhter Temperatur und erhöhtem Druck (Schmelzindex: 10 g/10 min bei 190 °C und 2,16 kg Belastung).

Die Komponenten wurden auf einem Zweischneckenextruder bei 280 °C abemischt und in ein Wasserbad extrudiert. Nach Granulierung und Trocknung wurden auf einer Spritzgußmaschine Prüfkörper gespritzt und geprüft.

Die Schlagzähigkeit $a_n$ wurde nach DIN 53 453 und die Schädigungsarbeit $W_{50}$ am Testkästchen in Anlehnung an DIN 53 443 Teil 1 bestimmt; der Brandtest wurde nach Underwriters Laboratory (UL) 94 durchgeführt.

Der Elastizitätsmodul wurde nach DIN 53 457 bestimmt.

Zur Bestimmung des freigesetzten Phosphors wurden die Proben 30 Tage in einem Wasserbad bei 23° C gelagert und anschließend der lösliche Phosphor bestimmt.

Die Zusammensetzung der Formmassen und die Ergebnisse der Messungen sind der Tabelle zu entnehmen.

Tabelle

| | Beispiel 1 | Beispiel 2 | Vergleichsbeisp. 3 |
|---|---|---|---|
| Komponente A (Gew.-%) | 64 | 60 | 68 |
| " B (Gew.-%) | 25 | 25 | 25 |
| " C (Gew.-%) | 7 | 7 | 7 |
| " D (Gew.-%) | 4 | 8 | - |
| Schlagzähigkeit $a_n$ (kJ/m²) (23°C) | 50 | 45 | 47 |
| Elastizitätsmodul (N/mm²) | 8500 | 8000 | 8900 |
| Schädigungsarbeit $W_{50}$ (Nm) | 2,2 | 2,6 | 1,1 |
| Bewertung nach UL 94 | | | |
| 1/8" | V0 | V0 | V0 |
| 1/16" | V1 | V0 | nicht best. |
| Löslicher Phosphor (ppm) nach 30 Tagen | 120 | 110 | 265 |

Die Ergebnisse der Tabelle zeigen, daß sich die erfindungsgemäßen Formmassen gegenüber bekannten Massen durch eine verbesserte Flammfestigkeit, insbesondere unter strengeren Bedingungen (1/16" Dicke) auszeichnen. Gegenüber bekannten kautschukmodifizierten glasfaserverstärkten Polyamiden ist vor allem der hohe Elastizitätsmodul vorteilhaft.

**Patentansprüche**

**1.** Flammgeschützte thermoplastische Formmassen, enthaltend als wesentliche Komponenten,

A) 5-92 Gew.-% eines Polyamids

B) 5-60 Gew.-% eines verstärkenden Füllstoffs, sowie, als Flammschutzmittelkombination,

C) 2-15 Gew.-% roten Phosphor und

D) 1-30 Gew.-% eines Olefinpolymerisats, aufgebaut aus

$d_1$) 55-79,5 Gew.-% mindestens eines $\alpha$-Olefins mit 2-8 C-Atomen,

$d_2$) 20-40 Gew.-% eines primären oder sekundären $C_1$-$C_{12}$-Alkylesters der Acrylsäure oder Methacrylsäure oder Mischungen derartiger Ester,

$d_3$) 0,5-20 Gew.-% eines säurefunktionellen und/oder eines latent säurefunktionellen Monomeren einer ethylenisch ungesättigten Mono- oder Dicarbonsäure und

$d_4$) 0-20 Gew.-% eines Epoxygruppen enthaltenden Monomeren,

mit der Maßgabe, daß die Komponente D kein Olefinhomopolymerisat ist, die Formmassen kein Titandioxid enthalten und Massen aus

A) 48,1 Gew.-% Polyhexamethylenadipinamid,

B) 35,0 Gew.-% Glasfasern,

C) 6,0 Gew.-% rotem Phosphor,
D) 10,0 Gew.-% eines Ethylen/n-Butylacrylat/Maleinsäureanhydrid-Terpolymeren (Gew.-Verhältnis 66 : 33 : 1) und 0,9 Gew.-% Cadmiumoxid
ausgeschlossen sind.

2. Flammgeschützte thermoplastische Formmassen nach Anspruch 1, dadurch gekennzeichnet, daß der Anteil der Komponente D 1-10 Gew.-% beträgt.

3. Verwendung der flammgeschützten thermoplastischen Formmassen gemäß den Ansprüchen 1 und 2 zur Herstellung von Fasern, Folien und Formkörpern.

4. Formkörper, erhältlich aus flammgeschützten thermoplastischen Formmassen gemäß den Ansprüchen 1 bis 3.

## Claims

1. A flameproofed thermoplastic molding material containing, as essential components,
A) 5-92% by weight of a polyamide,
B) 5-60% by weight of a reinforcing filler and, as a flamproofing combination,
C) 2-15% by weight of red phosphorus and
D) 1-30% by weight of an olefin polymer composed of
$d_1$) 55-79.5% by weight of one or more $\alpha$-olefins of 2-8 carbon atoms,
$d_2$) 20-40% by weight of a primary or secondary $c_1$-$c_{12}$ - alkyl ester of acrylic acid or methacrylic acid or a mixture of such esters,
$d_3$) 0.5-20% by weight of an ethylenically unsaturated mono- or dicarboxylic acid monomer posssessing acid functional groups and/or latent acid functional groups and
$d_4$) 0-20% by weight of a monomer containing epoxy groups,
with the proviso that the component D is not an olefin homopolymer, the molding material does not contain titanium dioxide and materials consisting of
A) 48.1% by weight of polyhexamethyleneadipamide,
B) 35.0% by weight of glass fibers,
C) 6.0% by weight of red phosphorus,
D) 10.0% by weight of an ethylene / n-butyl acrylate / maleic anhydride terpolymer (weight ratio of 66: 33 : 1) and 0.9% by weight of cadium oxide
are excluded.

2. A flameproofed thermoplastic molding material as claimed in claim 1, wherein the amount of component D is 1-10% by weight.

3. Use of a flameproofed thermoplastic molding material as claimed in claim 1 or 2 for producing fibers, films and moldings.

4. A molding obtainable from a flameproofed thermoplastic molding material as claimed in any of claims 1 to 3.

## Revendications

1. Masses à mouler thermoplastiques ignifugées, contenant, en tant que composants principaux,
A) de 5 à 92% en poids d'un polyamide,
B) de 5 à 50% en poids d'une charge de renforcement et, en tant que combinaison d'agents retardant les flammes,
C) de 2 à 15% en poids de phosphore rouge et
D) de 1 à 30% en poids d'un polymere oléfinique, compose de
$d_1$) 55 a 79,5% en poids d'au moins une $\alpha$-oléfine à 2-8 atomes de carbone.
$d_2$) 20 à 40% en poids d'un ester $C_1$-$C_{12}$-alkylique primaire ou secondaire de l'acide acrylique ou de l'acide méthacrylique, ou de melanges de tels esters,
$d_3$) 0,5 à 20% en poids d'un monomere à fonction acide et/ou à fonction acide latente d'un acide mono- ou dicarboxylique à insaturation éthylénique et

$d_4$) 0 à 20% en poids d'un monomère contenant des groupements époxy,
étant specifié que le composant D n'est pas un homopolymère d'oléfine, que les masses a mouler ne contiennent pas de bioxyde de titane et que les masses composées de
A) 46,1% en poids de polyhexaméthylène-adipamide,
B) 35,0% en poids de fibres de verre,
C) 6,0% en poids de phosphore rouge,
D) 10,0% en poids d'un terpolymère éthylène/acrylate de n-butyle/anhydride maléique (rapport en poids 66:33:1) et de 0,9% en poids d'oxyde de cadmium
sont exclues.

2. Masses à mouler thermoplastiques ignifugées selon la revendication 1, caractérisees en ce que la part du composant D s'élève à 1-10% en poids.

3. Utilisation des masses à mouler thermoplastiques ignifugees selon la revendication 1 ou 2 pour la fabrication de fibres, de feuilles ou de corps moulés.

4. Corps moulés, obtenus à partir de masses à mouler thermoplastiques ignifugees selon la revendication 1 ou